# EUROPÄISCHE PATENTSCHRIFT

(11) **EP 0 556 707 B1**
(45) Veröffentlichungstag und Bekanntmachung des Hinweises auf die Patenterteilung: **08.05.1996**
(21) Anmeldenummer: 93102086.1
(22) Anmeldetag: 11.02.1993
(51) Int. Cl.: G02F 1/137

(54) **Verfahren zur disinklinationsfreien Orientierung von Flüssigkristallen**
Method for disinclination-free orientation of liquid crystals
Procédé pour l'orientation sans disinclination de cristaux liquides

(30) Priorität: 21.02.1992 CH 536/92
(43) Veröffentlichungstag der Anmeldung: 25.08.1993
(73) Patentinhaber: F. HOFFMANN-LA ROCHE AG, CH-4002 Basel (CH)
(72) Erfinder: Schadt, Martin, CH-4411 Seltisberg (CH); Seiberle, Hubert, W-7856 Rümmingen (DE)
(74) Vertreter: Buntz, Gerhard

(56) Entgegenhaltungen:
- EP-A- 0 036 678
- PHYSICS LETTERS, Bd. 55A, Nr. 1, 3. November 1975, AMSTERDAM NL, Seiten 41-42; M. DE ZWART et al.: "Electric field-induced pitch contraction in the planar cholesteric texture of a liquid crystal with a large negative dielectric anisotropy'
- JAPANESE JOURNAL OF APPLIED PHYSICS, Bd. 29, Nr. 10, 10. Oktober 1990, TOKYO JP, Seiten 1974-1984; M. SCHADT et al.: "New liquid crystal polarized color projection principle"
- JAPANESE JOURNAL OF APPLIED PHYSICS, Bd. 19, Nr. 4, April 1980, TOKYO JP; H. HIDETOCHI et al.: "A two-color display device utilizing field-induced pitch contraction in cholesteric liquid crystal with negative dielectric anisotropy'
- MOLECULAR CRYSTALS AND LIQUID CRYSTALS + LETTERS Bd. 101, Nr. 1/2, 1983, NEW YORK US, Seiten 103-127; NAGAPPA et al.: "Optical behaviour of mixtures of nematic and cholesteric compounds'

## Beschreibung

Die Erfindung betrifft ein Verfahren zur disinklinationsfreien planaren Orientierung von cholesterischen Flüssigkristallen zwischen den beiden parallelen Platten einer Flüssigkristallzelle, sowie Mittel zur Durchführung dieses Verfahrens.

Für Anwendungen von cholesterischen Flüssigkristallen in optischen Bauelementen, insbesondere in optischen Filtern, ist es notwendig, eine Flüssigkristallschicht zwischen den beiden parallelen Platten einer Flüssigkristallzelle einheitlich planar zu orientieren. Unter planar werden für den Zweck dieser Beschreibung sowohl plattenparallele Molekülanordnungen verstanden, als auch solche, bei denen die Molküle einen sog. Kippwinkel von bis zu 30° einnehmen.

Bei der Herstellung solcher Zellen treten, verursacht z.B. durch Flussorientierung oder durch Abkühlung des Flüssigkristalls aus der isotropen Phase, fokal-konische Disinklinationslinien auf. Diese Disinklinationslinien führen dazu, dass auftreffendes Licht gestreut wird. Ferner wird das gestreute Licht depolarisiert und führt dadurch zu einer verminderten Filter- bzw. Polarisator-Wirkung von cholesterischen Flüssigkristallfiltern (vgl. Jpn. J. Appl. Phys., Vol. 29, No.10, 1990, Seiten 1974-1984, speziell Seite 1975)

Durch Scheren der Glasplatten lässt sich das Erscheinungsbild zwar verbessern, die Disinklinationslinien sind auf diese Weise jedoch weder vollständig zu beseitigen, noch ist dieses Verfahren produktionstechnisch durchführbar.

Der Erfindung liegt die Aufgabe zugrunde, derartige störende Disinklinationen in cholesterischen Flüssigkristallzellen zu vermeiden.

Erfindungsgemäss wird dies dadurch erreicht, dass der cholesterische Flüssigkristall mit einem nematischen oder smektischen Flüssigkristallmaterial mit negativer dielektrischer Anisotropie gemischt und die Zelle einem zu den Platten senkrecht gerichteten elektrischen Feld ausgesetzt wird.

Mit dem erfindungsgemässen Verfahren ist es überraschenderweise gelungen, eine cholesterische Flüssigkristallmischung mit kleiner Ganghöhe über eine grosse Fläche derart einheitlich planar zu orientieren, dass im gesamten orientierten Gebiet keine einzige Disinklinationslinie auftritt.

Weiterhin wurde gefunden, dass dies auch möglich ist, wenn nur eines oder sogar keines der beiden Zellensubstrate eine die Flüssigkristallmoleküle in eine Vorzugsrichtung ausrichtende Wandorientierung aufweist. Dies ist besonders überraschend, weil diese Orientierungsschichten bislang als unabdingbar betrachtet wurden.

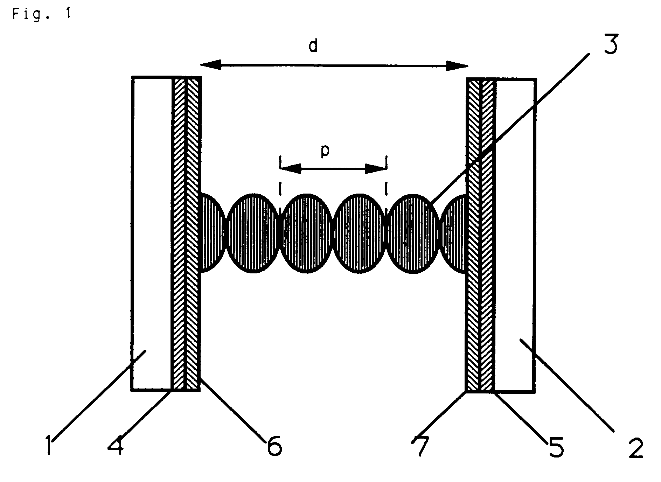

Im folgenden wird anhand der beiliegenden Zeichnung ein Ausführungsbeispiel der Erfindung beschrieben.

Die einzige Figur zeigt eine schematische Darstellung einer cholesterischen Flüssigkristall-Filter/Polarisatorzelle im Schnitt. Solche Zellen sind beispielsweise aus dem oben erwähnten Artikel bekannt. Beim vorliegenden Ausführungsbeispiel besteht die Zelle aus einem zwischen zwei planparallelen Glasplatten 1, 2 befindlichen cholesterischen Flüssigkristall 3 mit kleiner Ganghöhe p. Die Glasplatten weisen auf ihren dem Flüssigkristall zugewandten Flächen die von Flüssigkristallanzeigen bekannten ITO-Beschichtungen 4, 5 auf. Diese ITO-Schichten sind hier allerdings nicht wie üblich segmentiert. Der Abstand der Glasplatten ist mit Hilfe von sog. Spacern auf ca. 8 µm eingestellt, wobei der Plattenabstand nicht kritisch ist.

Die für die Zelle verwendeten ITO-beschichteten Glasplatten 1, 2 können eine spezielle Orientierungsschicht 6, 7 aufweisen, die die Flüssigkristallmoleküle in eine Vorzugsorientierung parallel zur Plattenoberfläche oder unter einem bestimmten Kippwinkel zu ihr ausrichtet.

Der Flüssigkristall 3 besteht aus einer Mischung aus drei cholesterischen Verbindungen und einem nematischen sog. Host mit negativer dielektrischer Anisotropie.

Die drei cholesterischen Verbindungen und ihre Gewichtsanteile in der Mischung sind:

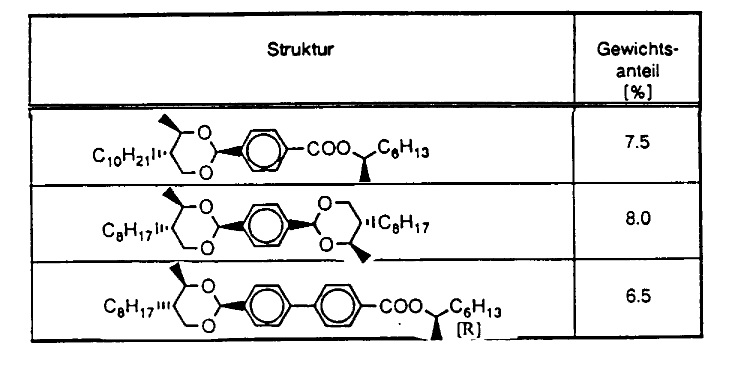

Die nematische Mischung ist wie folgt zusammengesetzt:

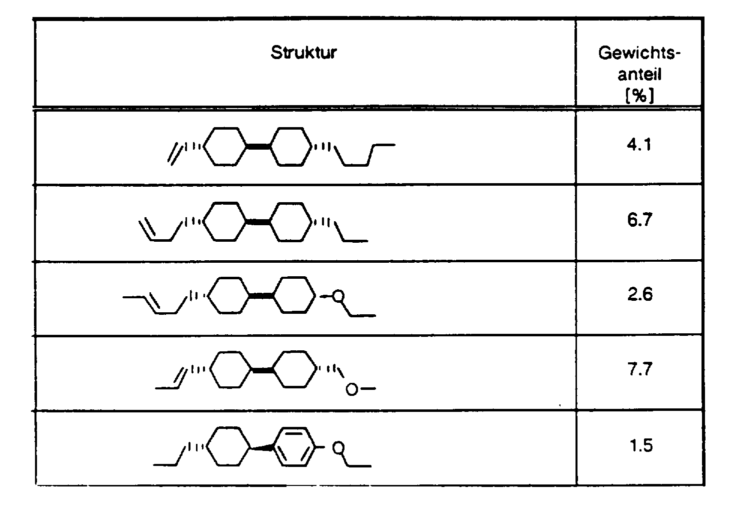

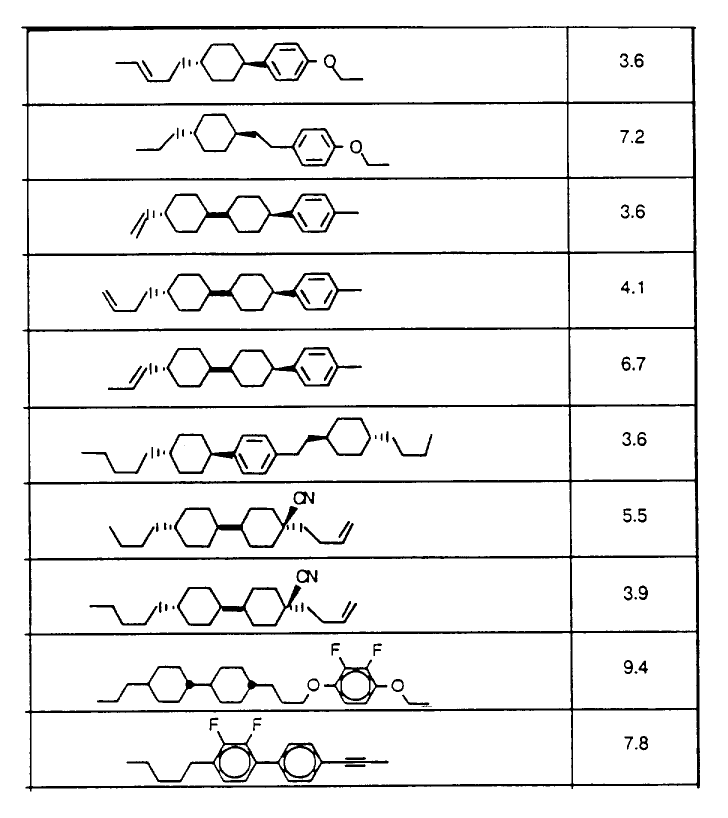

Diese Flüssigkristallmischung besitzt eine negative dielektrische Anisotropie von Δε = -1.6 und eine Helixganghöhe von p = 0.35 µm bei 22°C.

Zur Beseitigung der nach dem Füllen der Zelle trotz Oberflächenorientierung noch vorhandenen Disinklinationslinien wird an die Zelle für die Dauer von ca. einer Minute eine Wechselspannung von 20 - 60 Volt angelegt. Es stellt sich eine einheitliche planare Orientierung ein, die keine Disinklinationen mehr aufweist. Diese Orientierung bleibt auch nach Abschalten der Spannung bestehen und ist auf Dauer stabil.

Anstatt die Platten mit ITO-Schichten zu versehen und eine Spannung an diese anzulegen, ist es auch möglich die Zellen für die erforderliche Zeit in ein ausserhalb von ihr, beispielsweise in Form einer Coronaentladung, erzeugtes elektrisches Feld zu bringen bzw. durch ein solches Feld laufen zu lassen.

Es hat sich herausgestellt, dass die Beseitigung der Disinklinationen auf diese Weise genau gleich gut funktioniert, wenn nicht beide Glasplatten, sondern nur eine oder sogar keine der beiden Wandorientierungsschichten aufweisen. Mit anderen Worten, eine Vororientierung durch Wandeinflüsse ist nicht zwingend erforderlich. Dies ergibt den wesentlichen Vorteil, dass bei der Herstellung solcher Filter/Polarisatorzellen auf das Aufbringen von Orientierungsschichten verzichtet werden kann.

Neben der Anwendung gemäss dem beschriebenen Ausführungsbeispiel kommt die Erfindung in anderen Anwendungen zum Einsatz. Vor allem ist die Erfindung nicht auf Zellen beschränkt, in denen der Flüssigkristall zwischen Glasplatten angeordnet ist. In gleicher Weise können Zellen mit Kunststoffplatten und sogar als disinklinationsfreie chirale Polymerfolien hergestellt werden.

In Flüssigkristallanzeigen mit hochverdrillten nematischen Flüssigkristallen, den sog. Supertwist-LCDs, werden bekanntlich zur Vermeidung der unerwünschten Färbung im ausgeschalteten Zustand Kompensationsschichten eingesetzt. Ueblicherweise handelt es sich bei einer solchen Kompensationsschicht um eine zusätzliche hochverdrillte TN-Schicht, die eine dritte Begrenzungswand mit den entsprechenden Orientierungsschichten erfordert, allerdings ohne Elektrodenbeschichtung. Diese herstellungstechnisch sehr aufwendige Lösung kann durch planar orientierte chirale Flüssigkristall-Polymerfolien ersetzt werden, die gemäss der Erfindung hergestellt sind und auf die eigentliche Anzeigezelle aufgeklebt werden.

## Patentansprüche

1. Verfahren zur disinklinationsfreien planaren Orientierung von cholesterischen Flüssigkristallen zwischen den beiden parallelen Platten einer Flüssigkristallzelle dadurch gekennzeichnet, dass der cholesterische Flüssigkristall (3) mit einem nematischen oder smektischen Flüssigkristallmaterial mit negativer dielektrischer Anisotropie gemischt und die damit gefüllte Zelle einem zu den Platten (1, 2) senkrecht gerichteten elektrischen Feld ausgesetzt wird, wobei sich in der Flüssigkristallmischung eine einheitliche planare Vorzugsorientierung einstellt, die auch nach Abschalten des elektrischen Feldes bestehen bleibt.

2. Orientierungsverfahren nach Anspruch 1, dadurch gekennzeichnet, dass mindestens eine der Platten keine die Flüssigkristallmoleküle in eine Vorzugsrichtung orientierende Beschichtung (6, 7) besitzt.

3. Orientierungsverfahren nach Anspruch 1, dadurch gekennzeichnet, dass die Platten mit Elektrodenbeschichtungen (4, 5) versehen sind, an die zur Erzeugung des elektrischen Feldes eine Spannung angelegt wird.

## Claims

1. A method of planar orienting of cholesteric liquid crystals free from disinclinations between the two parallel plates of a liquid crystal cell, characterised in that the cholesteric liquid crystal (3) is mixed with a nematic or smectic liquid crystal material having negative dielectric anisotropy and the cell filled therewith is subjected to an electric field directed at right angles to the plates (1, 2), a unitary planar preferential orientation taking place in the liquid crystal mixture, and being retained after the electric field is switched off.

2. A method of orientation according to claim 1, characterised in that at least one of the plates does not have a coating (6, 7) for orienting the liquid crystal molecule in a preferred direction.

3. A method of orientation according to claim 1, characterised in that the plates are given electrode coatings (4, 5) to which a voltage is applied to generate the electric field.

## Revendications

1. Procédé pour l'orientation planaire sans désinclinaison de cristaux liquides cholestériques entre les deux plaques parallèles d'une cellule à cnstaux liquides, caractérisé en ce que le cristal liquide cholestérique (3) est mélangé avec une matière à cristaux liquides nématique ou smectique ayant une anisotropie diélectrique négative et en ce que l'on soumet la cellule ainsi remplie à un champ électrique orienté perpendiculairement aux plaques (1,2) de telle sorte qu'il s'établisse dans le mélange à cristaux liquides une orientation préférentielle uniforme planaire qui subsiste même après l'interruption du champ électrique.

2. Procédé d'orientation selon la revendication 1, caractérisé en ce qu'au moins une des plaques ne comporte aucun revêtement (6, 7) qui oriente les molécules de cristaux liquides dans une direction préférentielle.

3. Procédé d'onentation selon la revendication 1, caractérisé en ce que les plaques sont munies de revêtements d'électrodes (4, 5) sur lesquels on applique une tension pour produire le champ électrique.
